# NEUE EUROPÄISCHE PATENTSCHRIFT

(11) **EP 0 826 022 B2**
(45) Veröffentlichungstag und Bekanntmachung des Hinweises auf die Entscheidung über den Einspruch: **13.01.2016**
(45) Hinweis auf die Patenterteilung: 19.03.2003
(21) Anmeldenummer: 96909915.9
(22) Anmeldetag: 12.04.1996
(51) Int. Cl.: C10M 103/06, F16D 69/02

(54) **REIBBELAGMISCHUNGEN UND REIBBELÄGE**
FRICTION LINING MIXTURES AND FRICTION LININGS
MELANGES DESTINES A DES GARNITURES DE FRICTION ET GARNITURES DE FRICTION

(30) Priorität: 17.05.1995 AT 83895
(43) Veröffentlichungstag der Anmeldung: 04.03.1998
(73) Patentinhaber: Tribotecc GmbH, 1010 Wien (AT)
(72) Erfinder: GERINGER, Michael, A-9500 Villach (AT)
(74) Vertreter: Ellmeyer, Wolfgang
(86) Internationale Anmeldenummer: PCT/AT1996/000071
(87) Internationale Veröffentlichungsnummer: WO 1996/036681

(56) Entgegenhaltungen:
- EP-A- 0 328 514
- WO-A-95/02657
- AT-B- 0 399 162
- FR-A- 2 388 042
- JP-A- H07 165 937
- US-A- 2 421 543
- US-A- 3 851 045
- US-A- 4 130 492
- US-A- 4 261 741
- US-A- 5 288 792

## Beschreibung

Die Erfindung betrifft Festschmierstoffzusätze zu Reibbelagmischungen für Brems- oder Kupplungsbeläge.

Der Belag ist insbesondere harzgebunden.

Die Erfindung ist in den Patentansprüchen 1 bis 3 dargelegt.

Beispielsweise ist MoS₂ als Sulfid ein seit langem bekannter Festschmierstoff zur Ausbildung eines festen Schmierfilms zwischen Oberflächen, die relativ zueinander gleiten sollen. MoS₂ und andere Metallsulfide werden auch als Bestandteile von Gleitzusammensetzungen verwendet, die z.B. hauptsächlich aus PTFE bestehen, also z.B. Gleitlagerschalen oder Gleithülsen, um die Oberflächenreibung herabzusetzen.

So beschreibt die US 4 261 741 A eine Antireibungslegierung, die Eisen, Molybdän und Schwefel enthält, als Oberflächengleitmaterial und vergleicht es mit MoS₂, demgegenüber die Legierung bessere Gleiteigenschaften aufweisen soll. Die US 3 851 045 A betrifft ternäre Lanthanid/Übergangsmetallchalkogenide, die als Festschmierstoffe mit Hochtemperaturgleiteigenschaften, z.B. als Gleitoberflächen, verwendet werden können. Sie werden in der Schmierwirkung mit MoS₂ und Graphit verglichen.

Einige als Festschmierstoffe bekannte Metallsulfide werden auch bereits auf einem ganz anderen Fachgebiet eingesetzt, nämlich bei der Herstellung von Reibelementen, wie Bremsklötze, Bremsbacken, Brems- und Kupplungsbeläge, deren Zweck nicht die Vermeidung von Reibung, sondern die Erzeugung von Reibung ist.

Es liegt daher auf der Hand, daß bei der Anwendung von Festschmierstoffen in Reibbelägen nicht die Verminderung von Reibung die Zielsetzung ist oder sein kann. Das ist vielmehr die Stabilisierung des Reibverlaufes, wodurch es zur Abnahme abrasiver Vorgänge kommt, was sich positiv auf das Verschleiß- und Vibrationsverhalten auswirkt. Als höchst erwünschten Nebeneffekt zeigt sich bei der Anwendung bestimmter Festschmierstoffe eine bedeutende Stabilisierung des Reibwertes, d.h. die störende Abhängigkeit des Reibwertes und damit der Bremswirkung von Temperatur, Druck und Geschwindighkeit wird in großem Ausmaß unterdrückt. Aus der Tatsache, daß ein Stoff als Festschmierstoff bekannt ist, läßt sich über seine Eignung in Reibbelägen nichts herleiten.

Von den auch in Reibbelägen verwendeten speziellen Festschmierstoffen sind am besten bekannt Graphit und Molybdändisulfid, es gibt aber noch eine Reihe weiterer Metallsulfide, die fast nur in Reibbelägen Anwendung finden und sich von den oben genannten deutlich, vor allem hinsichtlich der Reibwertstabilisierung, unterscheiden.

In diesem Zusammenhang erwähnenswerte Veröffentlichungen finden sich in EP 497 751 sowie A 399 162, die sich mit verschiedenen Metallsulfiden bzw. Kombinationen daraus befassen.

Ein bekannter und verbreiteter Festschmierstoff für Reibbeläge ist Bleisulfid, das auf Grund der zunehmenden ökologischen Sensibilisierung gegen Schwermetalle für künftige Anwendungen jedoch in immer eingeschränkterem Maß zur Verfügung steht. Die guten und geschätzten Eigenschaften dieses Materials machen nach dem derzeitigen Stand der Technik jedoch einen Ersatz von Bleisulfid ohne Qualitätseinbußen im Reibbelag praktisch unmöglich.

Es gibt seit vielen Jahren Bestrebungen, durch Kombination verschiedenster Festschmierstoffe auf Basis von Graphiten, Sulfiden, Fluoriden, Phosphaten etc. synergistische Mischungen mit außerordentlichen Wirkungen herzustellen, hiezu siehe DE 25 14 575, DE 35 13 031 oder EP 328 514. Allerdings ist es mit diesen oder ähnlichen Kombinationen bislang noch nicht gelungen, in jeder Hinsicht zufriedenstellende Wirkung zu erzielen.

Auch die in A 399 162 beschriebenen Kombinationen auf Basis der Sulfide des Kupfers mit denen des Zinks, Antimons, Molybdäns, Zinns, Wolframs und Titans lassen trotz ihrer generell günstigen Eigenschaften bezüglich ihrer Wirkung noch immer Wünsche offen. Selbst weniger verbreitete Sulfide wie die des Wismuts stellen keine zufriedenstellende Lösung dar.

Nunmehr wurde überraschenderweise gefunden, daß eine Reihe von Zweimetall- und Dreimetallsulfiden bei ihrer Anwendung als Festschmierstoff, insbesondere in Reibbelägen, hervorragende Ergebnisse liefern, u.a. wesentlich günstigere Ergebnisse als zusammensetzungsmäßig analoge Mischungen von Einmetallsulfiden ergeben.

Dementsprechend wird erfindungsgemäß die Verwendung eines Festschmierstoffzusatzes, der zumindest ein Metallsulfid der Formel

M1ₗM2ₘM3ₙSₓ

enthält, in der M1, M2 und M3 voneinander verschieden sind und für jeweils ein Metall aus der Reihe Ti, V, Mn, Fe, Cu, Zn, Mo, W, Sb, Sn und Bi stehen, S Schwefel bezeichnet, und die Indices die Bereiche I = 1-5, m = 1-5, n = 0-5 und x = 2-8 umspannen, in einer Reibbelagmischung für mit einem Reibpartner zusammenwirkende Brems- und Kupplungsbeläge, bestehend aus Metallen, die in Faser- oder Pulverform vorliegen können, Füllstoffen, Gleitmitteln, Bindemitteln und organischen Bestandteilen, vorgeschlagen.

Vorzugsweise liegen das oder die Metallsulfide als Mehrphasensulfidgemisch vor, insbesondere als Kombination mindestens einer Verbindung der Formel

M1ₗM2ₘM3ₙSₓ

mit einem oder mehreren Sulfiden des Ti, V, Mn, Fe, Cu, Zn, Mo, W, Sb, Sn und Bi. Weiterhin vorgeschlagen werden entsprechende Reibbelagmischungen und Reibbeläge, die derartige Festschmierstoffe enthalten.

Zweimetallsulfide und Dreimetallsulfide aus der oben angegebenen Gruppe sind literaturbekannt und kommen auch als Mineralien vor; lediglich als Beispiele werden (in Klammer die entsprechenden Mineralien) Cu₂FeSnS₄ (Stannit), Cu₂FeSn₃S₈ (Rhodostannit), Cu₃SnS₄ (Kurmanit), Mn₂SnS₄, SnFe₂S₄, Cu₂TiS₂, genannt.

Die erfindungsgemäß als Festschmierstoffe verwendeten Zweimetall- und Dreimetallsulfide können nach den jeweiligen für die Herstellung von Sulfiden gängigen Verfahren hergestellt werden, also Sulfidieren (Erhitzen von Metallpulvern mit Schwefel oder Polysulfiden) oder Umsetzen von Hydroxiden oder Oxiden mit Ammonsulfid oder H₂S auf naßchemischem oder trockenem Weg.

Typischerweise können die Mehrmetallsulfide auch über eine Schmelzphase, z.B. durch Zusammenschmelzen von binären Reinsulfiden unter Luftausschluß, hergestellt werden, wobei sich oftmals Mischungen aus mehreren unterschiedlichen Phasen ergeben. Ebenso ist die naßchemische Fällung von Mehrmetallsulfiden literaturbekannt. Es hat sich gezeigt, daß auch bei der Sulfidierung von Metallegierungen und Metallpulvermischungen anteilig Mehrmetallsulfide entstehen, was mittels Röntgendiffraktion oder elektronenmikroskopisch mit Hilfe der Mikrosonde nachweisbar ist.

Die Erfindung wird nachstehend anhand von nichteinschränkenden Beispielen näher beschrieben.

### Beispiele:

Zum Vergleich der erfindungsgemäßen Sulfide mit bekannten Festschmiermitteln wurde eine typische Scheibenbremsbelagrezeptur verwendet. Die Rezeptur ohne Sulfide wird in einem Pflugscharmischer mit Messerkopf vermischt. Zur Herstellung der Prüflinge werden die zu vergleichenden Festschmierstoffe in gleichbleibenden Anteilen nachträglich in die Vormischung eingemischt, in einer druck- und temperaturgeregelten Laborpresse zu fahrzeugüblichen Scheibenbremsbelägen verpreßt und auf einem Krauss-Prüfstand getestet.

Die Prüfrezeptur weist folgende Zusammensetzung auf:

| | |
|---|---|
| Stahlwolle | 10 Gew.-% |
| Metallpulver | 15 % |
| Fasern | 9 % |
| Organische Anteile | 11 % |
| Reibstoffe | 9 % |
| Füllstoffe | 25 % |
| Graphite | 13 % |
| Sulfide | 8 % |

Beim Testprogramm wurde besonders auf Reibwertstabilität und Verschleißeigenschaften bei hohen Belastungen geachtet, weil unter diesen Bedingungen die günstigen Eigenschaften der Sulfide besonders zum Tragen kommen. Folgendes Testprogramm wurde gewählt:
1.) Einlaufphase mit 100 Stopps zur Konditionierung der Oberflächen;
2.) v-Test: 6 Zyklen mit je 5 Stopps in Serie, jeder Zyklus beginnend bei 100°C, darauffolgend 7 Zyklen mit je 10 Stopps in Serie, bei einer Geschwindigkeit entsprechend 140 km/h und einem Druck von 20 bar;
3.) p-Test: analog v-Test bei einer Geschwindigkeit entsprechend 60 km/h und einem Druck von 50 bar.

Die Temperatur steigt während der 10-Stopp-Zyklen auf etwa 550°C an, wodurch während des Testablaufes ein Temperaturprofil von 100-550°C abgedeckt wird. Als charakteristische Größen werden die Änderung des Reibwertes innerhalb dieses Temperaturprofils sowie der Gesamtverschleiß der Beläge für den Test, jeweils getrennt für v- und p-Test, ermittelt.

Die Ergebnisse der Testreihen sind nachfolgender Tabelle zu entnehmen. Dabei bedeuten PW-v und PW-p die Belagverschleiße im v- und p-Test, jeweils bewertet als Gewichtsabnahme in Gramm pro Belag, dMy-v und dMy-p bedeuten die Reibwertschwankung innerhalb eines Testzyklus von 100 bis 550°, wobei positive Werte auf eine Abnahme des Reibwertes bei hohen Temperaturen hinweisen.

| **Festschmierstoff** | **dMy-v** | **dMy-p** | **PW-v** | **PW-p** |
|---|---|---|---|---|
| Vergleichsprodukte: | | | | |
| PbS | -0.12 | -0.02 | 6.9 | 6.2 |
| Cu₂S | -0.02 | 0.12 | 5.0 | 9.2 |
| MoS₂ | 0.11 | 0.08 | 13.5 | 12.5 |
| FeS | 0.05 | 0.05 | 6.5 | 8.7 |

### Beispiel 1:

Zur Verdeutlichung der Unterschiede von Mischungen und erfindungsgemäßen Kombinationen wird eine Mischung aus Cu₂S (56 %) und ZnS (44 %) (Mischung 1) mit Kombination 1 verglichen. Diese erhält man durch Sulfidierung von Messingpulver (Cu/Zn 60:40). Kombination 1 und Mischung 1 enthalten dieselben Anteile an Cu, Zn und S, unterscheiden sich jedoch deutlich in ihren Röntgendiffraktogrammen.

| **Festschmierstoff** | **dMy-v** | **dMy-p** | **PW-v** | **PW**-**p** |
|---|---|---|---|---|
| Mischung 1 | 0.03 | 0.18 | 13.7 | 15.2 |
| Kombination 1 | 0.02 | 0.14 | 12.5 | 11.8 |

Man erkennt deutliche Verbesserungen in den Belageigenschaften bei hohem Druck, was sich in geringerem Reibwertabfall und geringerem Verschleiß gegenüber der Mischung der binären Sulfide auswirkt.

### Beispiel 2:

Hier werden Mischungen aus binären Sulfiden mit Kombinationen verglichen, die dieselben Elementverhältnisse aufweisen, jedoch durch Sulfidierung von Metallpulvermischungen hergestellt wurden, wobei sich die erfindungsgemäßen ternären und quaternären Phasen ausbilden konnten. Folgende Zusammensetzungen wurden getestet:

| **Zusammensetzung** | **Cu₂S** | **TiS₂** | **MnS** | **SnS** | **FeS** | **Bi₂S₃** |
|---|---|---|---|---|---|---|
| Mischung 2 | 80 | 20 | | | | |
| Mischung 3 | 45 | | 50 | 5 | | |
| Mischung 4 | 50 | | | 40 | 10 | |
| Mischung 5 | 50 | | | | 20 | 30 |
| Mischung 6 | 30 | | | 40 | | 30 |

Der Unterschied in der molekularen Zusammensetzung zwischen den Mischungen 2-6 und Kombinationen 2-6 äußert sich im Auftreten ternärer und quatemärer Sulfidphasen in den Kombinationen. Durch Röntgendiffraktion lassen sich folgende ternäre und quaternäre Phasen nachweisen:
Kombination 2: CuTi_{2.05}S₄
Kombination 3: Mn₂SnS₄
Kombination 4: Cu₃SnS₄, Cu₃Sn₂S₇, Cu₂FeSnS₄, Cu₂FeSn₃S₂
Kombination 5: CuFe₂S₃, Cu₂FeS₄, CuBiS₂
Kombination 6: Cu₂SnS₃, Cu₃SnS₄, CuBiS₂

Beim Einsatz der beschriebenen Mischungen und Kombinationen im eingangs beschriebenen Prüfablauf erhält man folgende Werte:

| **Festschmierstoff** | **dMy-v** | **dMy-p** | **PW-v** | **PW**-**p** |
|---|---|---|---|---|
| Mischung 2 | -0.02 | 0.10 | 5.3 | 8.4 |
| Mischung 3 | 0.0 | 0.10 | 7.5 | 15.7 |

| **Festschmierstoff** | **dMy-v** | **dMy-p** | **PW**-**v** | **PW-p** |
|---|---|---|---|---|
| Mischung 4 | 0.0 | 0.0 | 6.0 | 6.3 |
| Mischung 5 | -0.05 | 0.01 | 5.2 | 6.1 |
| Mischung 6 | -0.08 | -0.01 | 62 | 6.8 |

| **Erfindungsgemaße Produkte:** | | | | |
|---|---|---|---|---|
| **Kombination 2** | -0.02 | 0.06 | 5.5 | 5.8 |
| **Kombination 3** | -0.04 | 0.06 | 6.7 | 13.5 |
| **Kombination 4** | -0.04 | 0.0 | 4.8 | 5.1 |
| **Kombination 5** | -0.12 | -0.03 | 4.2 | 5.2 |
| **Kombination 6** | -0.15 | -0.03 | 5.7 | 6.1 |

Die angeführten Beispiele zeigen die Verbesserungen der erfindungsgemäßen Kombinationen gegenüber den binären Mischungen, wobei sowohl die Verschleißwerte als auch die Reibwertstabilität günstig beeinflußt werden können.

Bei den eingangs als Vergleichsbeispiele gezeigten Reinsubstanzen fällt insbesondere das enorme Stabilisierungspotential von Bleisulfid auf, das besonders unter Geschwindigkeitsbelastung zu einem mit der Temperatur ansteigenden Reibwert und damit zu einer Überstabilisierung führt. Auch unter Druckbelastung gibt es eine, wenn auch geringere, Überstabilisierung des Reibwertes. Die anderen gelisteten binären Sulfide zeigen deutliche Reibwerteinbrüche und zum Teil wesentlich höhere Verschleißwerte. Durch geeignete Mischung verschiedener Sulfide lassen sich die Schwächen der Einzelsulfide teilweise kompensieren, ohne daß damit jedoch die Qualität des Bleisulfides erreicht wird. Erst durch den gezielten Aufbau der erfindungsgemäßen ternären und quaternären Phasen in der Mischung lassen sich Kombinationen herstellen, die in ihrer Qualität die bekanntermaßen guten Eigenschaften von Schwermetallsulfiden erreichen.

## Patentansprüche

1. Verwendung eines Festschmierstoffzusatzes, der zumindest ein Metallsulfid der Formel
M1ₗM2ₘM3ₙSₓ
als Festschmierstoff enthält, in der M1, M2 und M3 voneinander verschieden sind und für jeweils ein Metall aus der Reihe Ti, V, Mn, Fe, Cu, Zn, Mo, W, Sb, Sn und Bi stehen, S Schwefel bezeichnet, und die Indices die Bereiche l = 1-5, m = 1-5, n = 0-5 und X = 2-8 umspannen in einer Reibbelagmishung für mit einem Reibpartner zusammenwirkende Brems- und Kupplungsbeläge, bestehend aus Metallen, die in Faser- oder Pulverform vorliegen können, Füllstoffen, Gleitmitteln, Bindemittel und organischen Bestandteilen.

2. Verwendung eines Festschmierstoffzusatzes nach Anspruch 1, **dadurch gekennzeichnet, daß** das oder die Metallsulfide als Mehrphasensulfidgemisch vorliegen.

3. Verwendung eines Festschmierstoffzusatzes nach Anspruch 2, **dadurch gekennzeichnet, daß** das oder die Metallsulfide als Kombination mindestens einer Verbindung der Formel
M1ₗM2ₘM3ₙSₓ
mit einem oder mehreren Sulfiden des Ti, V, Mn, Fe, Cu, Zn, Mo, W, Sb, Sn und Bi vorliegen.

## Claims

1. Utilization of a solid lubricant additive, containing at least one metal sulfide of the formula
M1ₗM2ₘM3ₙSₓ,
as a solid lubricant, wherein M1, M2, and M3 are different from each other and each represents a metal from the group of Ti, V, Mn, Fe, Cu, Zn, Mo, W, Sb, Sn and Bi, S designates sulfur, and the indices cover the ranges of I = 1-5, m = 1-5, n = 0-5, and X = 2-8 in a friction lining mixture for brake and clutch linings interacting with a friction partner, consisting of metals which can be present in the form of fibers or powders, fillers, lubricants, binders, and organic components.

2. Utilization of a solid lubricant additive according to claim 1, **characterized in that** the metal sulfide(s) are present as a multiphase sulfide mixture.

3. Utilization of a solid lubricant additive according to claim 2, **characterized in that** the metal sulfide(s) are present as a combination of at least one compound of the formula:
M1ₗM2ₘM3ₙSₓ,
with one or more sulfides of the Ti, V, Mn, Fe, Cu, Zn, Mo, W, Sb, Sn and Bi.

## Revendications

1. Utilisation d'un additif de lubrifiant solide, comprenant comme lubrifiant solide au moins un sulfure de métal de la formule
M1ₗM2ₘM3ₙSₓ,
dans laquelle M1, M2 et M3 sont différents l'un de l'autre et chacun représente un métal de la groupe de Ti, V, Mn, Fe, Cu, Zn, Mo, W, Sb, Sn et Bi, S est soufre et les indexes couvre les marges de l = 1-5, m = 1-5, n = 0-5 et X = 2-8 dans un mélange de garniture de friction pour des garnitures de frein et d'embrayage interagissant avec un partenaire de friction, composées de métaux qui peuvent être présents en forme de fibre ou poudre, matières de charge, lubrifiants, adhésifs et composants organiques.

2. Utilisation d'un additif de lubrifiant solide selon la revendication 1, **caractérisée en ce que** le ou les sulfure(s) de métal sont présents comme mélange de sulfure multiphasé.

3. Utilisation d'un additif de lubrifiant solide selon la revendication 2, **caractérisée en ce que** le ou les sulfure(s) de métal sont présents comme combinaison d'au moins un composé de la formule
M1ₗM2ₘM3ₙSₓ
avec un ou plusieurs sulfures de Ti, V, Mn, Fe, Cu, Zn, Mo, W, Sb, Sn et Bi.
